# EUROPÄISCHE PATENTSCHRIFT

(11) **EP 3 759 285 B1**
(45) Veröffentlichungstag und Bekanntmachung des Hinweises auf die Patenterteilung: **02.03.2022**
(21) Anmeldenummer: 18833194.6
(22) Anmeldetag: 18.12.2018
(51) Int. Cl.: E03C 1/084, F16L 27/04, F16L 37/52

(54) **KUGELGELENK**
BALL JOINT
JOINT SPHÉRIQUE

(30) Priorität: 28.02.2018 DE 202018101119 U
(43) Veröffentlichungstag der Anmeldung: 06.01.2021
(73) Patentinhaber: Neoperl GmbH, 79379 Müllheim (DE)
(72) Erfinder: OECHSLE, Daniel, 79379 Müllheim (DE); REINHARDT, Holger, 79232 March/Buchheim (DE)
(74) Vertreter: Mertzlufft-Paufler, Cornelius
(86) Internationale Anmeldenummer: PCT/EP2018/085493
(87) Internationale Veröffentlichungsnummer: WO 2019/166120

(56) Entgegenhaltungen:
- WO-A1-2011/157311
- DE-U1-202006 018 395
- DE-U1-202014 006 031
- US-A- 2 971 701

## Beschreibung

Die Erfindung betrifft ein Kugelgelenk gemäß Anspruch mit einem, an einer sanitären Wasserleitung befestigbaren ersten Kupplungsteil und einem damit gelenkig verbundenen zweiten Kupplungsteil, die miteinander verbundene Flüssigkeitskanäle aufweisen, wobei das zweite Kupplungsteil mit einem kugelkalotten- beziehungsweise kugelsegmentförmigen oder dergleichen kugeligen Stirnendbereich seiner Wandung zwischen einer formangepassten Gelenkpfanne am ersten Kupplungsteil einerseits und einem Gelenkkopf an einem in der Innenhöhlung des zweiten Kupplungsteiles vorgesehenen Halteelement andererseits verschwenkbar gehalten ist, wobei das Halteelement mit einem am ersten Kupplungsteil angreifenden Verbindungsschaft eine Durchstecköffnung des zweiten Kupplungsteiles durchsetzt und die Flüssigkeitskanäle des ersten Kupplungsteiles sowie des zweiten Kupplungsteiles miteinander verbindet, wobei das zweite Kupplungsteil an seiner die Innenhöhlung umgrenzenden Innenwandung eine Ringnut hat, in der eine Ringdichtung vorgesehen ist, die zwischen dem zweiten Kupplungsteil und dem Halteelement dichtet, wobei an der Innenwandung des zweiten Kupplungsteiles ein erster Ringabsatz vorgesehen ist, wobei in die Innenhöhlung des zweiten Kupplungsteiles ein ring- oder hülsenförmiges Einsetzteil einsetzbar ist, welches Einsetzteil an der Innenwandung des zweiten Kupplungsteiles gehalten ist, und wobei das Einsetzteil vom ersten Ringabsatz derart beabstandet ist, dass der Abstand zwischen dem ersten Ringabsatz und den dem ersten Ringabsatz zugewandten Stirnrand des Einsetzteiles die Ringnut bildet.

Aus der WO 2011/157 311 A1 ist bereits eine Handbrause vorbekannt, die über eine Kupplung mit einer flexiblen Schlauchleitung verbindbar ist. Um ein Verdrehen der Handbrause in Bezug auf die Längsachse der Schlauchleitung zu ermöglichen, ohne dass ein unbeabsichtigtes Lösen der zwischen Handbrause und Schlauchleitung vorgesehenen Schraubverbindung zu befürchten ist, ist die vorbekannte Handbrause über ein Kugelgelenk der eingangs erwähnten Art mit der Schlauchleitung verbunden. Das vorbekannte Kugelgelenk weist ein erstes Kupplungsteil und ein zweites Kupplungsteil auf, die miteinander verbundene Flüssigkeitskanäle haben. Dabei ist das zweite Kupplungsteil mit einem kugeligen Stirnendbereich seiner Wandung zwischen einer formangepassten Gelenkpfanne am ersten Kupplungsteil einerseits und einem Gelenkkopf an einem in der Innenhöhlung des zweiten Kupplungsteiles vorgesehenen Halteelement andererseits verschwenkbar gehalten. Dieses Halteelement durchsetzt mit einem am ersten Kupplungsteil angreifenden Verbindungsschaft eine Durchstecköffnung des zweiten Kupplungsteiles und verbindet die Flüssigkeitskanäle des ersten Kupplungsteiles sowie des zweiten Kupplungsteiles miteinander. Das zweite Kupplungsteil weist an seiner die Innenhöhlung umgrenzenden Innenwandung eine Ringnut auf, in der eine Ringdichtung vorgesehen ist, die zwischen dem zweiten Kupplungsteil und dem Halteelement abdichten soll. An der Innenwandung des zweiten Kupplungsteiles ist ein erster Ringabsatz vorgesehen und in die Innenhöhlung des zweiten Kupplungsteiles ist ein ring- oder hülsenförmiges Einsetzteil einsetzbar, das an der Innenwandung des zweiten Kupplungsteiles gehalten ist. Dabei ist das Einsetzteil vom ersten Ringabsatz derart beabstandet, dass der Abstand zwischen dem ersten Ringabsatz und dem dem ersten Ringabsatz zugewandten Stirnrand des Einsetzteiles die Ringnut bildet. Aus der DE 20 2014 006 031 U1 kennt man bereits einen Schlauchanschluss mit einer hülsenförmigen Überwurfmutter, die ein hülsenförmiges Anschlussstück umgreift, das mit einem Schlauchende einer flexiblen Schlauchleitung verbunden ist und das an seinem dem Schlauchende abgewandten Stirnendbereich einen Ringflansch hat, der auf einem Ringabsatz einer Umfangswandung drehbar aufliegt. Der vorbekannte Schlauchanschluss weist einen Dichtring auf, der in einer außenumfangsseitig am Anschlussstück vorgesehenen Haltenut gehalten ist und der einen zwischen dem Anschlussstück und der Umfangswandung vorgesehenen Ringspalt radial abdichtet, wobei zwischen dem Anschlussstück und der Umfangswandung ein derart bemessenes Spiel vorgesehen ist, dass das Anschlussstück und die Umfangswandung relativ zueinander kippbar sind.

Aus der US 2,971,701 kennt man bereits ein Kugelgelenk, dessen Kugelkopf auf einen Gewindezapfen aufschraubbar ist, den ein Rohrendstück trägt. Auf dem Kugelkopf des vorbekannten Kugelgelenks sitzt eine Überwurfmutter auf, deren lichte Öffnung so bemessen ist, dass die Überwurfmutter vom Kugelkopf nicht abgezogen werden kann. Die Überwurfmutter weist an ihrem dem Kugelkopf abgewandten Wandungsumfang ein Anschlussgewinde auf, auf welches das Gegengewinde eines Auslaufmundstücks aufschraubbar ist. Um zwischen der Überwurfmutter und dem wasserführenden Kugelkopf abzudichten, ist am Innenumfang der Überwurfmutter eine Nut vorgesehen, in die eine am Kugelkopf anliegende Ringdichtung vorgesehen ist.

Aus der DE 20 2006 018 395 U1 ist bereits ein Kugelgelenk vorbekannt, das mit seinem ersten Kupplungsteil an einem Wasserauslauf einer sanitären Auslaufarmatur lösbar befestigt werden kann, und das ein im ersten Kupplungsteil verschwenkbar gelagertes zweites Kupplungsteil hat, dessen Innenhöhlung vom abströmseitigen Stirnende des zweiten Kupplungsteils aus eine beispielsweise als Strahlregler ausgebildete Einsetzpatrone eingesetzt werden kann. Dabei werden das erste Kupplungsteil und das zweite Kupplungsteil durch spanende Bearbeitung aus Metall hergestellt. Im Rahmen der erforderlichen Herstellungsschritte muss auch die zum Einlegen einer Ringdichtung erforderliche Ringnut in die die Innenhöhlung umgrenzende Innenumfangswandung des zweiten Kupplungsteiles eingearbeitet werden. In dieser Ringnut können sich die während der spanenden Bearbeitung entstehenden Späne festsetzen. Diese Späne müssen anschließend durch eine umfassende Reinigung dieser spanend bearbeiteten Bauteile entfernt werden. Dennoch können insbesondere in den Eckbereichen dieser Ringnut sich Späne festsetzen, die anschließend beim Einsatz des vorbekannten Kugelgelenks zu Undichtigkeiten im Bereich der Ringdichtung führen.

Es besteht daher die Aufgabe, ein Kugelgelenk der eingangs erwähnten Art zu schaffen, dessen Herstellung mit einem reduzierten Aufwand verbunden ist und das dennoch eine erhöhte Funktionssicherheit gewährleistet.

Die erfindungsgemäße Lösung dieser Aufgabe besteht bei dem Kugelgelenk gemäß Anspruch der eingangs erwähnten Art insbesondere darin, dass das Einsetzteil bis zu einem Ringabsatz in die Innenhöhlung des zweiten Kupplungsteiles einsetzbar ist, dass das Einsetzteil sich zwischen dem zweiten Ringabsatz und einem dritten Ringabsatz erstreckt, und dass der dritte Ringabsatz und der benachbarte Stirnrand des Einsetzteiles in einer Ebene angeordnet sind.

Das erfindungsgemäße Kugelgelenk weist ein erstes Kupplungsteil auf, mit dem das Kugelgelenk an einer sanitären Wasserleitung befestigbar ist. Das erfindungsgemäße Kugelgelenk hat auch ein zweites Kupplungsteil, das mit dem ersten Kupplungsteil gelenkig verbunden ist. Erstes Kupplungsteil und zweites Kupplungsteil weisen miteinander verbundene Flüssigkeitskanäle auf. Dabei ist das zweite Kupplungsteil mit einem kugelkalotten- beziehungsweise kugelsegmentförmigen oder dergleichen kugeligen Stirnendbereich seiner Wandung zwischen einer formangepassten Gelenkpfanne am ersten Kupplungsteil einerseits und einem Gelenkkopf verschwenkbar gehalten, welcher Gelenkkopf an einem in der Innenhöhlung des zweiten Kupplungsteiles vorgesehenen Halteelement angeordnet ist. Das Halteelement weist einen Verbindungsschaft auf, der am ersten Kupplungsteil angreift und mit dem das Halteelement eine Durchstecköffnung des zweiten Kupplungsteiles durchsetzt. Das Halteelement verbindet die Flüssigkeitskanäle des ersten Kupplungsteiles sowie des zweiten Kupplungsteiles miteinander. Das zweite Kupplungsteil hat an seiner die Innenhöhlung umgrenzenden Innenwandung eine Ringnut, in der eine Ringdichtung vorgesehen ist, die zwischen dem zweiten Kupplungsteil und dem Halteelement abdichtet. An der Innenwandung des zweiten Kupplungsteiles ist dazu ein erster Ringabsatz vorgesehen und in die Innenhöhlung des zweiten Kupplungsteiles ist ein ring- oder hülsenförmiges Einsetzteil einsetzbar. Dieses Einsetzteil ist an der Innenwandung des zweiten Kupplungsteiles gehalten und vom ersten Ringabsatz derart beabstandet, dass der Abstand zwischen dem ersten Ringabsatz und dem dem ersten Ringabsatz zugewandten Stirnrand des Einsetzteiles die Ringnut bildet. In das zweite Kupplungsteil des erfindungsgemäßen Kugelgelenks muss somit die Ringnut nicht mehr durch spanende Bearbeitung eingearbeitet werden. Vielmehr wird diese Ringnut zwischen dem ersten Ringabsatz und dem Einsetzteil gebildet, welches in die Innenhöhlung des zweiten Kupplungsteiles einsetzbar ist. Da in die Innenhöhlung des zweiten Kupplungsteiles keine Ringnut mehr eingearbeitet werden muss, in der sich die durch die spanende Bearbeitung des zweiten Kupplungsteiles gebildeten Späne hartnäckig festsetzen können, wird eine hohe Funktionssicherheit des Kugelgelenks begünstigt, selbst wenn auf eine aufwendige Reinigung des zweiten Kupplungsteiles verzichtet wird.

Um für die Ringdichtung eine ausreichend breite Ringnut bereitzustellen und um den Abstand zwischen dem ersten Ringabsatz und der ihm zugewandten Stirnseite des ring- oder hülsenförmigen Einsetzteiles andererseits festzulegen, ist erfindungsgemäß vorgesehen, dass das Einsetzteil bis einem zweiten Ringabsatz in die Innenhöhlung des zweiten Kupplungsteiles einsetzbar ist. Um eventuellen Leckageströmen wirkungsvoll entgegenzuwirken, ist des Weiteren erfindungsgemäß vorgesehen, dass das Einsetzteil sich zwischen dem zweiten Ringabsatz und einem dritten Ringabsatz erstreckt, und dass der dritte Ringabsatz und der benachbarte Stirnrand des Einsetzteiles in einer Ebene angeordnet sind.

Das Einsetzteil kann beispielsweise über eine Schraubverbindung in der Innenhöhlung des zweiten Kupplungsteiles gehalten sein. Eine besonders einfache und dennoch ausreichend sichere Befestigung des Einsetzteiles sieht demgegenüber vor, dass das Einsetzteil form- und/oder reibschlüssig an der Innenwandung des zweiten Kupplungsteiles gehalten ist.

Sind der dritte Ringabsatz und der benachbarte Stirnrand des Einsetzteiles in einer Ebene angeordnet, kann an dem dritten Ringabsatz und dem benachbarten Stirnrand des Einsetzteiles ein Dichtring dicht angelegt werden.

Um das durch das erfindungsgemäße Kugelgelenk strömende Wasser gut formen und/oder einregeln zu können, ist es vorteilhaft, wenn von der dem ersten Kupplungsteil abgewandten Stirnöffnung des zweiten Kupplungsteiles eine sanitäre Einsetzpatrone in die Innenhöhlung des zweiten Kupplungsteiles einsetzbar ist.

Ein anderes vorteilhaftes Anwendungsbeispiel gemäß der Erfindung sieht vor, dass an dem ersten oder dem zweiten Kupplungsteil eine Handbrause und an dem jeweils anderen Kupplungsteil eine flexible Schlauchleitung vorzugsweise lösbar gehalten ist.

Eine Leckage des erfindungsgemäßen Kugelgelenks lässt sich auf besonders einfache Weise vermeiden, wenn die sanitäre Einsetzpatrone an dem dem Einsetzteil abgewandten Stirnrand des Dichtrings anliegt oder wenn an dem dem Einsetzteil abgewandten Stirnrand ein benachbarter Stirnrand eines Eckventils oder einer Handbrause anliegt.

An dem dem zweiten Kupplungsteil abgewandten Stirnendbereich des ersten Kupplungsteiles kann ein Innen- oder Außengewinde vorgesehen sein, das an dem Gegengewinde am Wasserauslauf einer sanitären Auslaufarmatur befestigbar ist.

Eine bevorzugte Ausführungsform gemäß der Erfindung sieht demgegenüber vor, dass das erste Kupplungsteil in seinem dem zweiten Kupplungsteil abgewandten Endbereich als Schlauchstutzen ausgebildet ist oder einen Schlauchstutzen aufweist, auf welchen Schlauchstutzen ein Schlauchende eines als flexible Schlauchleitung ausgebildeten Teilbereichs der Wasserleitung aufschiebbar ist.

Die einfache Herstellbarkeit des erfindungsgemäßen Kugelgelenks wird noch zusätzlich begünstigt, wenn das ring- oder hülsenförmige Einsetzteil aus Kunststoff hergestellt ist.

Um durch das erfindungsgemäße Kugelgelenk bei Bedarf auch heiße und insbesondere kochend heiße Flüssigkeiten führen zu können, kann es vorteilhaft sein, wenn das ring- oder hülsenförmige Einsetzteil aus einem hitzebeständigen und insbesondere einem kochfesten Material, vorzugsweise aus Metall, hergestellt ist.

Weiterbildungen gemäß der Erfindung ergeben sich aus der nachfolgenden Beschreibung eines bevorzugten Ausführungsbeispieles in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: ein in einer Seitenansicht dargestelltes Kugelgelenk, das ein erstes Kupplungsteil hat, an dem ein zweites Kupplungsteil verschwenkbar gehalten ist,
- Fig. 2: das in Fig. 1 gezeigte Kugelgelenk in einem Längsschnitt durch Schnittebene II-II aus Fig. 1, wobei in diesem Längsschnitt erkennbar ist, dass das zweite Kupplungsteil des Kugelgelenks eine Innenhöhlung hat, und dass in der die Innenhöhlung umgrenzenden Innenwandung des zweiten Kupplungsteiles eine Ringnut vorgesehen ist, die zwischen einem in der Innenwandung vorgesehenen ersten Ringabsatz und der benachbarten Stirnseite eines in die Innenhöhlung eingesetzten Einsetzteiles gebildet ist,
- Fig. 3: das zum Einsetzen in die Innenhöhlung des zweiten Kupplungsteiles bestimmte Einsetzteil des in den Fig. 1 und 2 gezeigten Kugelgelenks in einer perspektivischen Seitenansicht, und
- Fig. 4: das Kugelgelenk in einer auseinandergezogenen Perspektivdarstellung seiner Bestandteile.

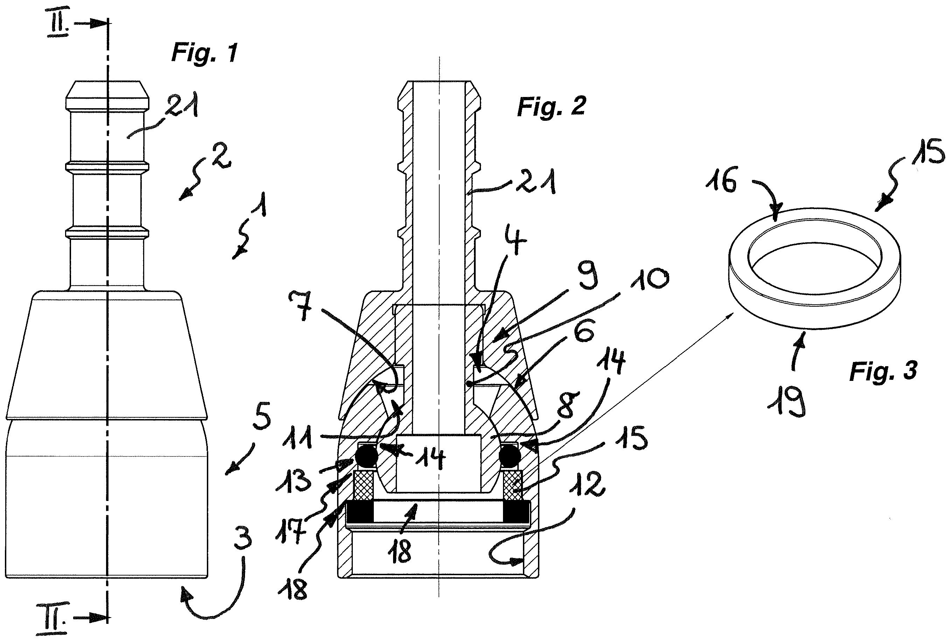

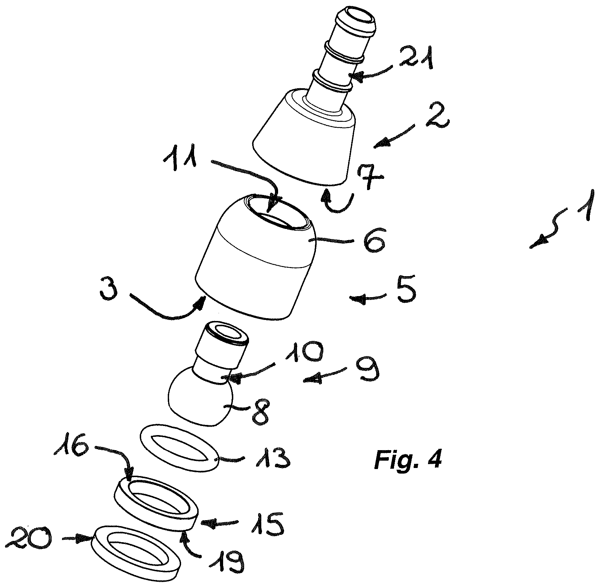

In den Fig. 1, 2 und 4 ist ein Kugelgelenk 1 in verschiedenen Ansichten dargestellt. Das Kugelgelenk 1 weist ein erstes Kupplungsteil 2 auf, das mit einer sanitären Wasserleitung verbindbar ist. Das erste Kupplungsteil 2 des Kugelgelenks 1 ist dazu mit einem zweites Kupplungsteil 5 gelenkig verbunden, wobei erstes Kupplungsteil 2 und zweites Kupplungsteil 5 Flüssigkeitskanäle aufweisen, die miteinander verbunden sind.

Das zweites Kupplungsteil 5 des hier dargestellten Kugelgelenks 1 ist mit einem kugeligen Stirnendbereich 6 seiner Wandung zwischen einer formangepassten Gelenkpfanne 7 am ersten Kupplungsteil 2 einerseits und einem Gelenkkopf 8 an einem in der Innenhöhlung 4 des zweiten Kupplungsteiles 5 vorgesehenen Halteelement 9 andererseits verschwenkbar gehalten. Das Halteelement 9 durchsetzt mit einem am ersten Kupplungsteil 2 angreifenden Verbindungsschaft 10 eine Durchstecköffnung 11 des zweiten Kupplungsteiles 5. Das Halteelement 9 verbindet die Flüssigkeitskanäle des ersten Kupplungsteiles 2 sowie des zweiten Kupplungsteiles 5 miteinander.

In den Fig. 1, 2 und 4 ist erkennbar, dass das Halteelement 9 im Wesentlichen hülsenförmig ausgebildet ist. Das Kugelgelenk 1 kann an seinem zweiten Kupplungsteil 5 eine abströmseitige Einstecköffnung 3 aufweisen, durch die hindurch eine Einsetzpatrone in die Innenhöhlung 4 des zweiten Kupplungsteiles 5 einsetzbar ist. Bei dem hier dargestellten Ausführungsbeispiel weist das zweite Kupplungsteil 5 ein Gewinde 12 auf, welches an dem Gegengewinde eines wandseitigen Eckventils verschraubt werden kann.

Aus einem Vergleich der Fig. 1, 2 und 4 wird deutlich, dass das zweite Kupplungsteil 5 an seiner die Innenhöhlung 4 umgrenzenden Innenwandung eine Ringnut hat, in der eine Ringdichtung 13 vorgesehen ist, die zwischen dem zweiten Kupplungsteil 5 und dem Haltelement 9 dichtet. An der Innenwandung des zweiten Kupplungsteiles 5 ist dazu ein erster Ringabsatz 14 vorgesehen, der im Abstand zwischen sich und dem benachbarten Stirnrand 16 eines Einsetzteiles 15 die Ringnut für die Ringdichtung 13 bildet. Das Einsetzteil 15 ist dazu in die Innenhöhlung 4 des zweiten Kupplungsteiles 5 einsetzbar, bis das Einsetzteil 15 an einem zweiten Ringabsatz 17 in der Innenhöhlung 4 anliegt. Das Einsetzteil 15 ist an der Innenwandung des zweiten Kupplungsteiles 5 vorzugsweise reibschlüssig und insbesondere durch Presssitz gehalten. Wie aus dem Längsschnitt in Fig. 2 deutlich wird, erstreckt sich das Einsetzteil 15 zwischen dem zweiten Ringabsatz 17 und einem dritten Ringabsatz 28, welcher dritte Ringabsatz 18 mit dem benachbarten Stirnrand 19 des Einsetzteils 15 in einer Ebene angeordnet ist. An dem dritten Ringabsatz 18 und dem benachbarten Stirnrand 19 des Einsetzteiles 15 liegt ein Dichtring 20 an.

Wie aus einem Vergleich der Fig. 1, 2 und 4 deutlich wird, ist das erste Kupplungsteil 2 in seinem dem zweiten Kupplungsteil 5 abgewandten Endbereich als Schlauchstutzen 21 ausgebildet, auf welchen Schlauchstutzen 21 ein Schlauchende eines als flexible Schlauchleitung ausgebildeten Teilbereichs der Wasserleitung aufschiebbar ist. Während das zweite Kupplungsteil 5 und das erste Kupplungsteil 2 vorzugsweise aus Metall hergestellt sind, ist das ring- oder hülsenförmige Einsetzteil 15 demgegenüber aus Kunststoff gefertigt.

### Bezugszeichenliste

- 1: Kugelgelenk
- 2: erstes Kupplungsteil
- 3: Einstecköffnung
- 4: Innenhöhlung
- 5: zweites Kupplungsteil
- 6: kugeliger Stirnendbereich des zweiten Kupplungsteils (5)
- 7: Gelenkpfanne
- 8: Gelenkkopf
- 9: Halteelement
- 10: Verbindungsschaft
- 11: Durchstecköffnung am zweiten Kupplungsteil (5)
- 12: Gewinde am zweiten Kupplungsteil
- 13: Ringdichtung
- 14: erster Ringabsatz
- 15: Einsetzteil
- 16: Stirnrand
- 17: zweiter Ringabsatz
- 18: dritter Ringabsatz
- 19: Stirnrand
- 20: Dichtring
- 21: Schlauchstutzen

## Patentansprüche

1. Kugelgelenk (1) mit einem, an einer sanitären Wasserleitung befestigbaren ersten Kupplungsteil (2) und einem damit gelenkig verbundenen zweiten Kupplungsteil (5), die miteinander verbundene Flüssigkeitskanäle aufweisen, wobei das zweites Kupplungsteil (5) mit einem kugelkalotten- beziehungsweise kugelsegmentförmigen oder dergleichen kugeligen Stirnendbereich (6) seiner Wandung zwischen einer formangepassten Gelenkpfanne (7) am ersten Kupplungsteil (2) einerseits und einem Gelenkkopf (8) an einem in der Innenhöhlung (4) des zweiten Kupplungsteiles (5) vorgesehenen Halteelements (9) andererseits verschwenkbar gehalten ist, wobei das Halteelement (9) mit einem am ersten Kupplungsteil (2) angreifenden Verbindungsschaft (10) eine Durchstecköffnung (11) des zweiten Kupplungsteiles (5) durchsetzt und die Flüssigkeitskanäle des ersten Kupplungsteiles (2) sowie des zweiten Kupplungsteiles (5) miteinander verbindet, und wobei das zweite Kupplungsteil (5) an seiner die Innenhöhlung (4) umgrenzenden Innenwandung eine Ringnut hat, in der eine Ringdichtung (13) vorgesehen ist, die zwischen dem zweiten Kupplungsteil (5) und dem Halteelement (9) dichtet, wobei an der Innenwandung des zweiten Kupplungsteiles (5) ein erster Ringabsatz (14) vorgesehen ist, wobei in die Innenhöhlung (4) des zweiten Kupplungsteiles (5) ein ring- oder hülsenförmiges Einsetzteil (15) einsetzbar ist, welches Einsetzteil (15) an der Innenwandung des zweiten Kupplungsteiles (5) gehalten ist, und wobei das Einsetzteil (15) vom ersten Ringabsatz (14) derart beabstandet ist, dass der Abstand zwischen dem ersten Ringabsatz (14) und dem dem ersten Ringabsatz (14) zugewandten Stirnrand (16) des Einsetzteils (15) die Ringnut bildet, **dadurch gekennzeichnet, dass** das Einsetzteil (15) bis zu einem zweiten GEAENDERTES BLATT Ringabsatz (17) in die Innenhöhlung (4) des zweiten Kupplungsteiles (5) einsetzbar ist, dass das Einsetzteil (15) sich zwischen dem zweiten Ringabsatz (17) und einem dritten Ringabsatz (18) erstreckt, und dass der dritte Ringabsatz (18) und der benachbarte Stirnrand (19) des Einsetzteiles (15) in einer Ebene angeordnet sind.

2. Kugelgelenk nach Anspruch 1, **dadurch gekennzeichnet, dass** das Einsetzteil (15) form- und/oder reibschlüssig an der Innenwandung des zweiten Kupplungsteiles (5) gehalten ist.

3. Kugelgelenk nach Anspruch 1 oder 2, **dadurch gekennzeichnet, dass** an dem dritten Ringabsatz (18) und dem benachbarten Stirnrand (19) des Einsetzteiles (15) ein Dichtring (20) anliegt.

4. Kugelgelenk nach einem der Ansprüche 1 bis 3, **dadurch gekennzeichnet, dass** von der dem ersten Kupplungsteil (2) abgewandten Stirnöffnung (3) des zweiten Kupplungsteiles (5) eine sanitäre Einsetzpatrone in die Innenhöhlung einsetzbar ist.

5. Kugelgelenk nach Anspruch 4, **dadurch gekennzeichnet, dass** die sanitäre Einsetzpatrone an dem dem Einsetzteil (15) abgewandten Stirnrand (19) des Dichtrings (20) anliegt.

6. Kugelgelenk nach einem der vorstehenden Ansprüche, **dadurch gekennzeichnet, dass** an dem ersten (2) oder dem zweiten Kupplungsteil (5) eine Handbrause und an dem jeweils anderen Kupplungsteil (5; 2) eine flexible Schlauchleitung vorzugsweise lösbar gehalten ist.

7. Kugelgelenk nach einem der Ansprüche 1 bis 6, **dadurch gekennzeichnet, dass** das erstes Kupplungsteil (2) in seinem dem zweiten Kupplungsteil (5) abgewandten Endbereich als Schlauchstutzen (21) ausgebildet ist, auf welchen Schlauchstutzen (21) ein Schlauchende eines als flexible Schlauchleitung ausgebildeten Teilbereichs der Wasserleitung aufschiebbar ist.

8. Kugelgelenk nach einem der Ansprüche 1 bis 7, **dadurch gekennzeichnet, dass** das ring- oder hülsenförmige Einsetzteil (15) aus Kunststoff hergestellt ist.

9. Kugelgelenk nach einem der Ansprüche 1 bis 7, **dadurch gekennzeichnet, dass** das ring- oder hülsenförmige Einsetzteil (15) aus einem hitzebeständigen und insbesondere kochfesten Material, vorzugsweise aus Metall, hergestellt ist.

## Claims

1. Ball joint (1) with a first coupling part (2), which can be fastened to a sanitary water line, and a second coupling part (5), which is connected in an articulated manner to said first coupling part, which have liquid channels connected to one another, wherein the second coupling part (5) is held pivotably by a spherical face end region (6), in the form of a spherical cap or segment of a sphere or the like, of its wall between a form-adapted joint socket (7) on the first coupling part (2), on the one hand, and a joint head (8) on a holding element (9) provided in the inner cavity (4) of the second coupling part (5), on the other hand, wherein the holding element (9) passes through a push-through opening (11) in the second coupling part (5) by means of a connecting shaft (10) engaging on the first coupling part (2) and connects the liquid channels of the first coupling part (2) and of the second coupling part (5) to one another, and wherein the second coupling part (5) has, on its inner wall bounding the inner cavity (4) , an annular groove in which is provided an annular seal (13), which provides a seal between the second coupling part (5) and the holding element (9), wherein a first annular offset (14) is provided on the inner wall of the second coupling part (5), wherein an insert part (15) that is annular or in the form of a sleeve can be inserted into the inner cavity (4) of the second coupling part (5), which insert part (15) is held on the inner wall of the second coupling part (5), and wherein the insert part (15) is spaced apart from the first annular offset (14) such that the spacing between the first annular offset (14) and that face edge (16) of the insert part (15) which faces the first annular offset (14) forms the annular groove, **characterized in that** the insert part (15) can be inserted into the inner cavity (4) of the second coupling part (5) as far as a second annular offset (17), **in that** the insert part (15) extends between the second annular offset (17) and a third annular offset (18), and **in that** the third annular offset (18) and the adjacent face edge (19) of the insert part (15) are arranged in a plane.

2. Ball joint according to Claim 1, **characterized in that** the insert part (15) is held in a form fit and/or frictional engagement on the inner wall of the second coupling part (5).

3. Ball joint according to Claim 1 or 2, **characterized in that** a sealing ring (20) bears against the third annular offset (18) and the adjacent face edge (19) of the insert part (15).

4. Ball joint according to one of Claims 1 to 3, **characterized in that** a sanitary insert cartridge can be inserted into the inner cavity from that face opening (3) of the second coupling part (5) which faces away from the first coupling part (2).

5. Ball joint according to Claim 4, **characterized in that** the sanitary insert cartridge bears against that face edge (19) of the sealing ring (20) which faces away from the insert part (15).

6. Ball joint according to one of the preceding claims, **characterized in that** a handheld shower attachment is preferably releasably held on the first coupling part (2) or the second coupling part (5) and a flexible hose line is preferably releasably held on the other coupling part respectively (5; 2).

7. Ball joint according to one of Claims 1 to 6, **characterized in that** the first coupling part (2) is in the form of a hose connector (21) in its end region, which faces away from the second coupling part (5), onto which hose connector (21) a hose end of a partial region, in the form of a flexible hose connector, of the water line can be pushed.

8. Ball joint according to one of Claims 1 to 7, **characterized in that** the insert part (15) that is annular or in the form of a sleeve is produced from plastic.

9. Ball joint according to one of Claims 1 to 7, **characterized in that** the insert part (15) that is annular or in the form of a sleeve is produced from a heat-resistant and in particular boiling-resistant material, preferably from metal.

## Revendications

1. Articulation à rotule (1) avec une première pièce d'accouplement (2) pouvant être fixée à une conduite d'eau sanitaire et une deuxième pièce d'accouplement (5) reliée de façon articulée à celle-ci qui présentent des canalisations de liquide reliées entre elles, dans laquelle la deuxième pièce d'accouplement (5) est maintenue de façon pivotante avec une zone d'extrémité frontale (6) en forme de calotte sphérique, de segment sphérique ou autre forme sphérique de sa paroi entre une cupule (7) de forme adaptée sur la première pièce d'accouplement (2), d'une part, et une tête d'articulation (8) sur un élément de maintien (9) prévu dans la cavité intérieure (4) de la deuxième pièce d'accouplement (5), d'autre part, dans laquelle l'élément de maintien (9) traverse avec une tige de liaison (10) en prise avec la première pièce d'accouplement (2) un orifice d'emmanchement (11) de la deuxième pièce d'accouplement (5) et relie entre elles les canalisations de liquide de la première pièce d'accouplement (2) et de la deuxième pièce d'accouplement (5), et dans laquelle la deuxième pièce d'accouplement (5) a sur sa paroi intérieure entourant la cavité intérieure (4) une rainure annulaire dans laquelle est prévu un joint annulaire (13) qui assure l'étanchéité entre la deuxième pièce d'accouplement (5) et l'élément de maintien (9), dans laquelle sur la paroi intérieure de la deuxième pièce d'accouplement (5) est prévu un premier épaulement annulaire (14), dans laquelle dans la cavité intérieure (4) de la deuxième pièce d'accouplement (5) peut être insérée une pièce rapportée (15) en forme de bague ou de douille, laquelle pièce rapportée (15) est écartée du premier épaulement annulaire (14) de sorte que l'écart entre le premier épaulement annulaire (14) et le bord frontal (16) de la pièce rapportée (15) orienté vers le premier épaulement annulaire (14) forme la rainure annulaire, **caractérisée en ce que** la pièce rapportée (15) peut être insérée jusqu'à un épaulement annulaire (17) dans la cavité intérieure (4) de la deuxième pièce d'accouplement (5), que la pièce rapportée (15) s'étend entre le deuxième épaulement annulaire (17) et un troisième épaulement annulaire (18) et que le troisième épaulement annulaire (18) et le bord frontal (19) voisin de la pièce rapportée (15) sont disposés dans un même plan.

2. Articulation à rotule selon la revendication 1, **caractérisée en ce que** la pièce rapportée (15) est maintenue par emboîtement et/ou par friction sur la paroi intérieure de la deuxième pièce d'accouplement (5).

3. Articulation à rotule selon la revendication 1 ou 2, **caractérisée en ce qu'**un joint annulaire (20) est placé au niveau du troisième épaulement annulaire (18) et du bord frontal (19) voisin de la pièce rapportée (15).

4. Articulation à rotule selon une des revendications 1 à 3, **caractérisée en ce qu'**une cartouche d'insertion sanitaire peut être insérée dans la cavité intérieure par l'orifice frontal (3) de la deuxième pièce d'accouplement (5) opposée à la première pièce d'accouplement (2).

5. Articulation à rotule selon la revendication 4, **caractérisée en ce que** la cartouche d'insertion sanitaire se trouve au niveau de la face frontale (19) de la bague d'étanchéité (20) opposée à la pièce rapportée (15).

6. Articulation à rotule selon une des revendications précédentes, **caractérisée en ce qu'**un pommeau de douche à main est maintenu, de préférence de façon détachable, au niveau de la première (2) ou de la deuxième pièce d'accouplement (5) et un tuyau flexible au niveau de l'autre pièce d'accouplement (2 ; 5).

7. Articulation à rotule selon une des revendications 1 à 6, **caractérisée en ce que** la première pièce d'accouplement (2) est configurée comme un raccord de tuyau (21) dans sa zone d'extrémité opposée à la deuxième pièce d'accouplement (5), sur lequel raccord de tuyau (21) pouvant être enfilée une extrémité de tuyau d'une portion de la conduite d'eau configurée comme une conduite en tuyau flexible.

8. Articulation à rotule selon une des revendications 1 à 7, **caractérisée en ce que** la pièce rapportée (15) en forme de bague ou de douille est fabriquée en matière plastique.

9. Articulation à rotule selon une des revendications 1 à 7, **caractérisée en ce que** la pièce rapportée (15) en forme de bague ou de douille est fabriquée dans un matériau résistant à la chaleur et en particulier résistant à l'eau bouillante, de préférence en métal.
